(19)

Europäisches Patentamt

European Patent Office

Office européen des brevets

(11) **EP 2 475 161 A1**

(12) **EUROPEAN PATENT APPLICATION**
published in accordance with Art. 153(4) EPC

(43) Date of publication:
**11.07.2012 Bulletin 2012/28**

(21) Application number: **10833016.8**

(22) Date of filing: **26.10.2010**

(51) Int Cl.:
*H04N 5/225* (2006.01)    *G06T 3/00* (2006.01)
*H04N 5/232* (2006.01)

(86) International application number:
**PCT/JP2010/068923**

(87) International publication number:
**WO 2011/065169 (03.06.2011 Gazette 2011/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2009   JP 2009269035**

(71) Applicant: **Hitachi, Ltd.**
**Chiyoda-ku**
**Tokyo 100-8280 (JP)**

(72) Inventors:
• **NAKASUGI, Takashi**
  **Chiyoda-ku**
  **Tokyo (JP)**

• **MORIOKA, Takayuki**
  **Chiyoda-ku**
  **Tokyo (JP)**
• **IKESHOJI, Nobuo**
  **Chiyoda-ku**
  **Tokyo (JP)**

(74) Representative: **Moore, Graeme Patrick et al**
**Mewburn Ellis LLP**
**33 Gutter Lane**
**London**
**EC2V 8AS (GB)**

(54) **IMAGE CAPTURE SYSTEM, IMAGE CAPTURE METHOD, AND STORAGE MEDIUM FOR STORING IMAGE CAPTURE PROGRAM**

(57)    The present invention relates to segmented image taking and merging processing of segmented images with logical consistency with high efficiency at low cost and thereby enables easy formation of a high-definition merged image. An imaging system 10 includes a distance calculator 110 that calculates a distance from an imaging object to a fixed position of a digital camera by using a predetermined formula and stores the calculated distance; a resolution setting unit 111 that sets and stores hierarchal resolutions; a frame layout unit 112 that executes a process for each of the resolutions, the process including forming segment frames by dividing an angle of view of an image taking area by a predetermined angle, laying out the segment frames so that focus areas in respective segment frames overlap, and storing information on a layout of the segment frames and the corresponding resolution as a segmented image taking plan; a segmented image taking instruction unit 113 that sends the digital camera and a motor-driven pan head an instruction to take images of the segment frames from a single viewpoint for each of the resolutions, based on the segmented image taking plan, and acquires and stores a segmented image; and a segmented image merging unit 114 that executes a process for each of the segmented image taking plans, the process including forming a base image by enlarging each of captured images of a predetermined segmented image taking plan to a one-step-higher resolution, merging together segmented images obtained by a segmented image taking plan having the one-step-higher resolution by aligning each of the segmented images through pattern matching between the segmented image and the base image, and storing a merged image.

FIG. 1

## Description

[Technical Field]

The present invention relates to an imaging system, an imaging method, and a storage medium storing an imaging program, and more particularly to technology to achieve segmented image taking and merging processing of segmented images with logical consistency with high efficiency at low cost and thereby to enable easy formation of a high-definition merged image.

[Background Art]

Incorporation by Reference

This application claims the benefit of priority to Japanese Patent Application Laid-open Publication No. 2009-269035, filed November 26, 2009, of which full contents are incorporated herein by reference.

Heretofore, there have been needs for high-definition images. In particular for art objects such as paintings, studies have been made to faithfully reproduce the originals in digital images from the viewpoint of studies, reuse or preservation.

On the other hand, in order to reproduce an object in an image with reality, there has been a proposal of technology that involves taking segmented images for obtaining a high-resolution image (segmenting an object and taking an image of each segment of the object), and synthesizing the segmented images thus taken (Refer to NPL 1). The technology uses a hierarchization approach to take images of an object with resolutions changed stepwise, ranging from an image of the whole object (hereinafter called a whole-object image) to segmented images with a finally required resolution (hereinafter called a target resolution). Also, this technology aims to reproduce the object as realistic an image as possible by using the hierarchization approach in which the segmented images thus obtained are merged through image merging operations using the whole-object image as a "reference image" for merging processing of segmented images with the resolution higher by one step, and then using the merged image as a reference image for the merging processing of segmented images with the resolution higher by another one step.

Although not targeted for art objects, there has also been a proposal of technology that involves taking a whole-object image and segmented images, making corrections on the whole-object image, determining the positions of the segmented images relative to the whole-object image before the correction, and merging the segmented images together, based on the determined positions and the corrected whole-object image, thereby generating high-resolution image data (Refer to PTL 1).

[Citation List]

[Patent Literature]

   [PTL 1] Japanese Patent Application Publication No. 2006-338284 [Non Patent Literature]

   [NPL 1] Shunichi TAKEUCHI et al., "High Resolution Image Digitization by Layered Image Mosaicing Using Projected Mask," IEICE Transactions, D-II, Vol. J83-D-II No.4, pp. 1090-1099, April 2000

[Summary of Invention]

[Technical Problem]

However, the conventional technologies have the following problems. Specifically, in the image taking using the hierarchization approach, the segmented images are taken while varying shooting distances to obtain hierarchal resolutions. Thus, viewpoints vary among the resolutions thereby causing what is called a parallax problem, and an imaging object with an uneven surface (ex. an oil painting or the like), in particular, is prone to cause inconsistency in image merging. Also, image taking takes lots of time and effort because first a geometrical pattern is projected onto the imaging object for specifying the positions of segments when taking segmented images and thereafter images of each segment of the object is taken by manual alignment with the projected geometrical pattern as reference. Further, image taking takes time and effort again because of the necessity to take three images for one segmented image, including the segmented image together with images of two types of projected geometrical patterns, which are to be used as a reference for merging the segmented images. Alternatively, segmented images may be taken with a single resolution and the segmented images may be merged together based on the image of the entire object thereby directly forming a merged image. In this case, however, if the image of the entire object and the segmented images have difference in resolution, there may arise problems such as troubles in pattern matching accuracy in the merging operation or image mismatch after the merging.

Therefore, the present invention has been made in view of the above-described problems, and a principal object thereof is to provide technology to realize segmented image taking and merging processing of segmented images with logical consistency and high efficiency at low cost and thereby enabling easy formation of a high-definition merged image.

[Solution to Problem]

An imaging system of the present invention that solves the above-described problems, is a computer communicatively coupled to a digital camera and a motor-driven pan head therefor and configured to control image taking by the digital camera, and includes the following functional units. Specifically, the imaging system includes a distance calculator that calculates a distance from an imaging object to a fixed position of the digital camera by using a predetermined formula in accordance with a target resolution to be obtained for an image of the imaging object, an image pickup device resolution of the digital camera and a focal length of a lens, and stores the calculated distance in a storage unit.

Also, the imaging system includes a resolution setting unit that sets hierarchal resolutions ranging from a resolution of a captured image of the whole imaging object to the target resolution, and stores the set resolutions in the storage unit.

Also, the imaging system includes a frame layout unit that executes a process for each of the resolutions stored in the storage unit, the process including forming segment frames achieved by dividing the horizontal and vertical lengths of an angle of view of the imaging object to be taken (hereinafter referred to as image taking area) by a predetermined angle, in other words, segmenting the image taking area, laying out respective segment frames so that the focus area in respective segment frames (hereinafter referred to as focus area) overlap, and storing information on at least a layout of the segment frames and the corresponding resolution as a segmented image taking plan in the storage unit.

Also, the imaging system includes a segmented image taking instruction unit that transmits an instruction to take an image from a single viewpoint for the positions of the respective segment frames for each of the resolutions, based on the segmented image taking plan containing the layout information and the resolution information stored in the storage unit, to the digital camera and the motor-driven pan head fixed at the distance from the imaging object, acquires segmented images taken for the respective segment frames for each of the resolutions from the digital camera, and stores the acquired segmented image in the storage unit.

Also, the imaging system includes a segmented image merging unit that executes a process for each of the segmented image taking plans stored in the storage unit, the process including reading each of captured images of a predetermined segmented image taking plan from the storage unit, forming a base image by enlarging the captured image to the same resolution as that of a segmented image taking plan having a one-step-higher resolution among the hierarchal resolutions, determining a corresponding area on the base image for each of segmented images of the segmented image taking plan having the one-step-higher resolution, based on the position of the segmented image, merging the segmented images together by aligning each of the segmented images through pattern matching between the segmented image and the base image, and storing a merged image in the storage unit.

Also, an imaging method of the present invention is **characterized in that** a computer communicatively coupled to a digital camera and a motor-driven pan head therefor and configured to control image taking by the digital camera executes the following processes. Specifically, the computer executes a process of calculating a distance from an imaging object to a fixed position of the digital camera by using a predetermined formula in accordance with a target resolution to be obtained for an image of the imaging object, an image pickup device resolution of the digital camera, and a focal length of a lens, and storing the calculated distance in a storage unit.

Also, the computer executes a process of setting hierarchal resolutions ranging from a resolution of a captured image of the whole imaging object to the target resolution, and storing the set resolutions in the storage unit.

Also, the computer executes a process, for each of the resolutions stored in the storage unit, the process including forming segment frames into which an image taking area is segmented by dividing an angle of view of the image taking area by a predetermined angle, laying out the segment frames so that focus area in respective segment frames overlap, and storing information on at least a layout of the segment frames and the corresponding resolution as a segmented image taking plan in the storage unit.

Also, the computer executes a process of transmitting an instruction to take an image from a single viewpoint for the positions of the respective segment frames for each of the resolutions, based on the segmented image taking plan containing the layout information and the resolution information stored in the storage unit, to the digital camera and the motor-driven pan head fixed at the distance from the imaging object, acquiring segmented images taken for the respective segment frames for each of the resolutions from the digital camera, and storing the acquired segmented image in the storage unit.

Also, the computer executes a process, for each of the segmented image taking plans stored in the storage unit, including reading each of captured images of a predetermined segmented image taking plan from the storage unit, forming a base image by enlarging the captured image to the same resolution as that of a segmented image taking plan having a one-step-higher resolution among the hierarchal resolutions, determining a corresponding area on the base image for each of segmented images of the segmented image taking plan having the one-step-higher resolution, based on the position of the segmented images, merging the segmented images together by aligning each of the segmented images through pattern matching between the segmented image and the base image, and storing a merged image in the storage unit.

Also, an imaging program of the present invention is stored in a computer-readable recording medium, and is for use in a computer communicatively coupled to a digital camera and a motor-driven pan head therefor and configured to control image taking by the digital camera, the program causing the computer to execute the following processes. Specifically, the imaging program of the present invention causes the computer to execute: a process of calculating a distance from an imaging object to a fixed position of the digital camera by using a predetermined formula in accordance with a target resolution to be obtained for an image of the imaging object, an image pickup device resolution of the digital camera, and a focal length of a lens, and storing the calculated distance in a storage unit; a process of setting hierarchal resolutions ranging from a resolution of a captured image of the whole imaging object to the target resolution, and storing the set resolutions in the storage unit; a process for each of the resolutions stored in the storage unit, including forming segment frames into which an image taking area is segmented by dividing an angle of view of the image taking area by a predetermined angle, laying out the segment frames so that focus area in respective segment frames overlap, and storing information on at least a layout of the segment frames and the corresponding resolution as a segmented image taking plan in the storage unit; a process of transmitting an instruction to take an image from a single viewpoint for the positions of the respective segment frames for each of the resolutions, based on the segmented image taking plan containing the layout information and the resolution information stored in the storage unit, to the digital camera and the motor-driven pan head fixed at the distance from the imaging object, acquiring segmented images taken for the respective segment frames for each of the resolutions from the digital camera, and storing the acquired segmented image in the storage unit; and a process of executing a process for each of the segmented image taking plans stored in the storage unit, the process including reading each of captured images of a predetermined segmented image taking plan from the storage unit, forming a base image by enlarging the captured image to the same resolution as that of a segmented image taking plan having a one-step-higher resolution among the hierarchal resolutions, determining a corresponding area on the base image for each of segmented images of the segmented image taking plan having the one-step-higher resolution, based on the position of the segmented images, merging the segmented images together by aligning each of the segmented images through pattern matching between the segmented image and the base image, and storing a merged image in the storage unit.

[Advantageous Effects of Invention]

According to the present invention, segmented image taking and merging processing of segmented images with logical consistency can be achieved with high efficiency at low cost to thereby enable easy formation of a high-definition merged image.

[Brief Description of Drawings]

[Fig. 1] Fig. 1 is a block diagram showing an example of a network configuration including an imaging system of an embodiment of the present invention.
[Fig. 2] Fig. 2 is an illustration showing an example of a general outline of single-viewpoint image taking of the present embodiment.
[Fig. 3] Fig. 3 is a flowchart showing example 1 of an operational flow of an imaging method of the present embodiment.
[Fig. 4] Fig. 4 is a flowchart showing example 2 of an operational flow of the imaging method of the present embodiment.
[Fig. 5] Fig. 5 is an illustration showing by way of example in schematic form relationships among an imaging object, a lens, and a CCD (Charge Coupled Device) in the present embodiment.

[Fig. 6] Fig. 6 is an illustration showing an example of hierarchal resolution setting of the present embodiment.

[Fig. 7] Fig. 7 is a diagram showing an example of a uniform layout of segment frames in the present embodiment.

[Fig. 8] Fig. 8 is a representation showing an example of a layout of segment frames at an equal camera angle in the present embodiment.

[Fig. 9] Fig. 9 is an illustration showing a concept of calculation of a circle of confusion in the present embodiment.

[Fig. 10] Fig. 10 is an illustration showing a concept of calculation of a circle of confusion when a camera is rotated, in the present embodiment.

[Fig. 11] Fig. 11 is an illustration showing an example of a area of an allowable circle of confusion of segment frames in the present embodiment.

[Fig. 12] Fig. 12 is an illustration showing an example of a layout of segment frames taking a focus area into account, in the present embodiment.

[Fig. 13] Fig. 13 is a flowchart showing example 3 of an operational flow of the imaging method of the present embodiment.

[Fig. 14] Fig. 14 is a flowchart showing example 4 of an operational flow of the imaging method of the present embodiment.

[Description of Embodiments]

System configuration

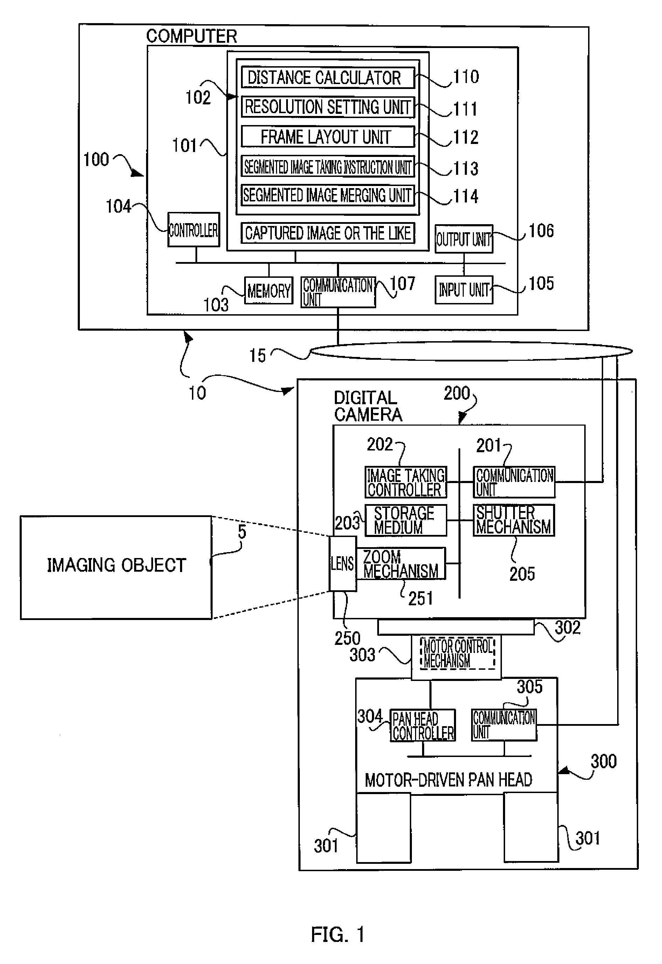

Embodiments of the present invention will be described in detail below with reference to the drawings. Fig. 1 is a block diagram showing an example of a network configuration including an imaging system 10 of the present embodiment. The imaging system 10 (hereinafter, the system 10) shown in Fig. 1 is a computer system configured to achieve segmented image taking and merging processing of segmented images with logical consistency with high efficiency and at low cost and thereby enabling easy formation of a high-definition merged image.

A computer 100 of the imaging system 10, and a digital camera 200 and a motor-driven pan head 300 are coupled to a network 15 of the present embodiment. The computer 100 is a server apparatus managed by a company or the like that provides digital archiving of art objects such as for example paintings, and may be envisaged as an apparatus communicatively connected via the various networks 15 such as a LAN (local area network) and a WAN (wide area network) to the digital camera 200 and the motor-driven pan head 300 placed in an art museum, that is, a location where image taking takes place, containing an art object such as a painting as an imaging object 5. Of course, the computer 100, and the digital camera 200 and the motor-driven pan head 300 may be integrated, rather than connected to each other via the network 15.

The digital camera 200 is a camera that forms an image of a subject, that is, the imaging object 5, through a lens 250 on a CCD (Charge Coupled Device), converts the image into digital data by the CCD, and stores the digital data in a storage medium 203 such as a flash memory, and is sometimes called a digital still camera. The digital camera 200 includes a communication unit 201 that communicates with the computer 100 via the network 15, and an image taking controller 202 that sets a specified resolution by controlling a zoom mechanism 251 of the lens 250 in accordance with an instruction to take an image, received from the computer 100 via the communication unit 201, and gives an instruction to perform an image taking operation to a shutter mechanism 205.

Also, the motor-driven pan head 300 is an apparatus that movably supports and fixes the digital camera 200. The motor-driven pan head 300 is the pan head placed on a supporting member 301 such as a tripod, and includes a mounting portion 302 that mounts and fixes the digital camera 200, a movable portion 303 that acts as a mechanism (ex. a bearing, a gear, a cylinder, a stepping motor, or the like) that allows vertical and horizontal movements of the mounting portion 302, a pan head controller 304 that gives a drive command (ex. an instruction instructing the amount of angle of rotation of the motor or the like) in accordance with an instruction from the computer 100 to take an image, to (the stepping motor or the like of) the movable portion 303, and a communication unit 305 that communicates with the computer 100 via the network 15.

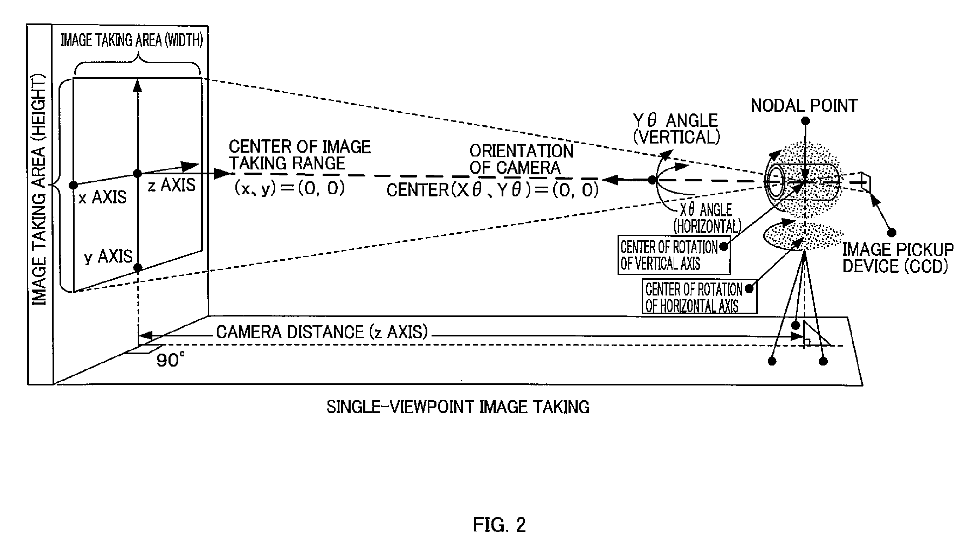

In the present embodiment, the digital camera 200 and the motor-driven pan head 300 are used to perform single-viewpoint segmented image taking. (See Fig. 2.) The single-viewpoint segmented image taking is an image taking method in which the digital camera 200 is placed at a predetermined distance from the imaging object 5 (hereinafter called a camera distance) so as to oppose the center of the imaging object 5, and the digital camera 200 rotates on a nodal point of the digital camera 200 (or the lens 250) (that is, the center of a focal point inherent in the lens) to thereby take segmented images of the imaging object 5. In short, this is an approach in which the orientation (or image taking direction) of the digital camera 200 is moved up and down and right and left by the motor-driven pan head 300 to thereby take segmented images of the imaging object 5 completely from a single viewpoint (that is, with an image taking position of the digital camera 200 fixed at a single location). Adopting this approach, segmented images of the imaging object 5 with unevenness, for example, are taken by the camera panning up and down and right and left around the nodal point thereby to enable eliminating parallax between the captured images (or pixel misalignment). The images obtained by segmented image taking at the nodal point can undergo accurate image merging processing with no logical inconsistency between the images.

Although the state of the single-viewpoint image taking is schematically illustrated in Fig. 2, the body of the digital camera 200 is omitted from Fig. 2, and the digital camera 200 merely represents the relative positions of the lens 250 and the image pickup device (or the CCD). Also, the motor-driven pan head capable of freely setting the image taking direction of the digital camera 200 under the control of the computer 100, is centered on the nodal point, which is shown in Fig. 2 with only its axis of rotation and the body thereof omitted.

Next, a configuration of the computer 100 will be described. The computer 100 may be envisaged as the server apparatus that forms the system 10. The computer 100 is configured by including a storage unit 101, a memory 103, a controller 104 such as a CPU (central processing unit), and a communication unit 107, which are coupled to one another by a bus.

The computer 100 loads and the like a program 102 stored in the storage unit 101 such as a hard disk drive into a volatile memory such as the memory 103 to make the controller 104 execute the program 102. Also, the computer 100 may include an input unit 105 such as various keyboards and mice generally included in a computer apparatus, and an output unit 106 such as a display, as needed. Also, the computer 100 has the communication unit 107 such as NIC (Network Interface Card) that serves to send and receive data to and from other apparatuses, and is communicative with the digital camera 200 and the motor-driven pan head 300 and the like via the network 15.

Next, description will be given with regard to functional units configured and held, for example based on the program 102, in the storage unit 101 of the computer 100. The computer 100 includes a distance calculator 110 that calculates a distance from the imaging object 5 to the fixed position of the digital camera by a predetermined formula in accordance with a target resolution to be obtained for an image of the imaging object 5, and a CCD resolution of the digital camera 200 and a focal length of the lens 250, and stores the calculated distance in the storage unit 101.

Also, the computer 100 includes a resolution setting unit 111 that sets hierarchal resolutions ranging from a resolution of a captured image of the whole imaging object to the target resolution, and stores the set resolutions in the storage unit 101.

Also, the computer 100 includes a frame layout unit 112 that executes a process for each of the resolutions stored in the storage unit 101, and the process involves forming segment frames into which an image taking area is segmented by dividing an angle of view of the image taking area by a predetermined angle, laying out the segment frames so that focus areas in respective segment frame overlap, and storing information on at least a layout of the segment frames and a corresponding resolution as a segmented image taking plan in the storage unit 101.

Also, the computer 100 includes a segmented image taking instruction unit 113 that transmits an instruction to take an image from a single viewpoint for the position of each of the segment frames for each of the resolutions, based on the segmented image taking plan containing the layout information and the resolution information stored in the storage unit 101, to the digital camera 200 and the motor-driven pan head 300 fixed at the above-described distance from the imaging object 5, acquires a segmented image taken for each of the segment frames for each of the resolutions from the digital camera 200, and stores the acquired segmented image in the storage unit 101.

Also, the computer 100 includes a segmented image merging unit 114 that executes a process for each of the segmented image taking plans stored in the storage unit 101, and the process involves reading each of captured images obtained by a predetermined segmented image taking plan from the storage unit 101, forming a base image by enlarging the captured image to the same resolution as that of a segmented image taking plan having a one-step-higher resolution of the hierarchal resolutions, determining a corresponding area on the base image for each of segmented images obtained by the segmented image taking plan having the one-step-higher resolution, based on the position of each of the segmented images, merging the segmented images together by performing alignment of each of the segmented images by performing pattern matching between each of the segmented images and the base image, and storing a merged image in the storage unit 101.

Incidentally, the resolution setting unit 111 may set hierarchal resolutions ranging from a resolution of a captured image of the whole imaging object to the target resolution, by setting a higher scaling factor from one to another of the resolutions as the resolution becomes higher, and store the set resolutions in the storage unit 101.

Also, the frame layout unit 112 may execute a process for each of the resolutions stored in the storage unit 101, and the process involves forming segment frames into which an image taking area is segmented by dividing an angle of view of the image taking area by a predetermined angle, calculating diameters of circles of confusion (hereinafter called confusion circle diameters) in each of the segment frames, determining in advance a confusion circle diameter indicating an area in which a circle of confusion is in focus (hereinafter called an allowable confusion circle diameter) by test image taking or the like, determining that an area where the confusion circle diameters are equal to or smaller than the allowable confusion circle diameter is a focus area in the segment frame, laying out the segment frames so that the focus areas in respective segment frames overlap, and storing information on at least a layout of the segment frames and a corresponding resolution as a segmented image taking plan in the storage unit 101.

The units 110 to 114 in the computer 100 described above may be implemented in hardware, or may be implemented in the program 102 stored in the memory or the appropriate storage unit 101 such as the HDD (Hard Disk Drive) in the computer 100. In this case, the controller 104 such as the CPU of the computer 100 loads a corresponding program from the storage unit 101 according to program execution, and executes the program.

Example 1 of processing procedure

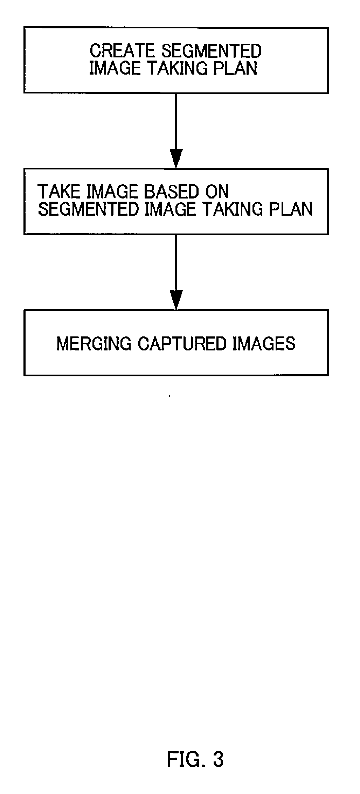

Description will be given below with regard to an actual procedure for an imaging method of the present embodiment, based on the drawings. Various operations for the imaging method to be described below are implemented in a program executed by being loaded into the memory of mainly the computer 100 (or the digital camera 200 or the motor-driven pan head 300) that forms the system 10. Then, the program is composed of codes to perform the various operations to be described below. A main flow of the imaging method of the present embodiment is the flow from creation of a segmented image taking plan to image taking based on the segmented image taking plan, and merging processing of the segmented images, as shown in Fig. 3.

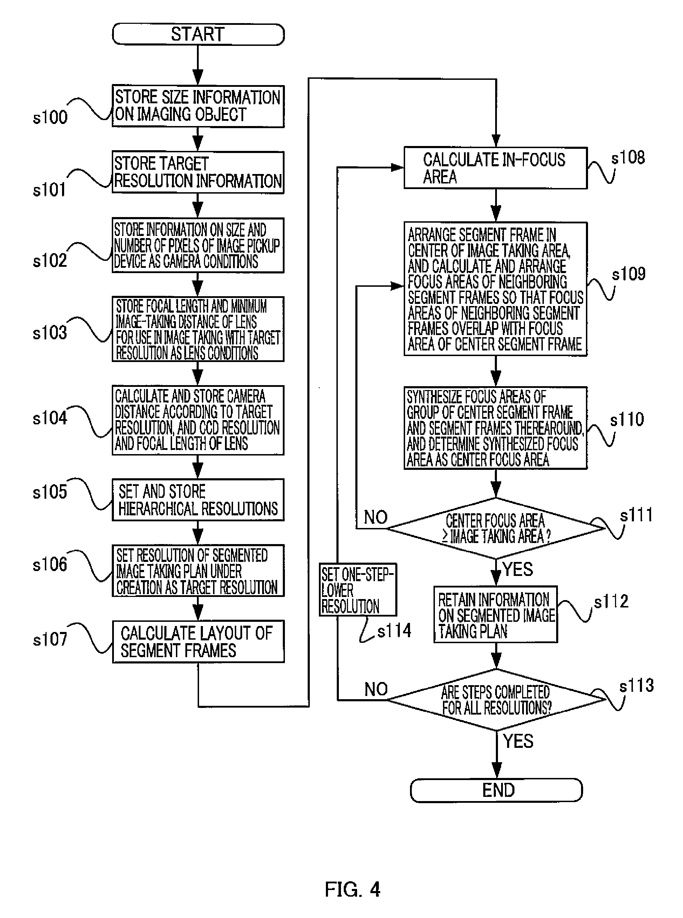

Firstly, description will be given mainly with regard to a process for creating a segmented image taking plan. Fig. 4 is a flowchart showing an example 1 of an operational flow of the imaging method of the present embodiment. In this case, the distance calculator 110 of the computer 100 receives information on an image taking area of the imaging object 5 through the input unit 105, and stores the information in the storage unit 101 (at step s100). When the imaging object 5 is a painting, information on the height and width of the painting is obtained. At this time, the distance calculator 110 may add a predetermined value to the size of the imaging object 5 received at step s100, taking into account an image taking error (e.g. an error in placement or operation of photo equipment), thereby to set a margin having a predetermined width on the outside of the imaging object 5 and set the image taking area inclusive of the margin.

Then, the distance calculator 110 receives information on a maximum image-taking resolution, that is, a target resolution, of the imaging object 5 through the input unit 105, and stores the information in the storage unit 101 (at step s101). For example, for digitizing the imaging object 5 (or its conversion into image data) with a resolution of "1200 dpi (dots per inch)," input indicative of "1200" is received through the input unit 105. (Of course, a resolution list previously recorded in the storage unit 101 may be displayed on the output unit 106 in order for a user to select a desired resolution.)

Then, the distance calculator 110 receives information on the size (or the height and width) and the number of pixels (or the numbers of pixels in the height and width directions) of the image pickup device (or the CCD) of the digital camera 200 for use in image taking, through the input unit 105, and stores the information as "camera conditions" in the storage unit 101 (at step s102). Also, the distance calculator 110 receives information on the focal length of the lens 250 for use in image taking with the target resolution and a minimum image-taking distance of the lens 250 (that is, image taking becomes impossible if the lens approaches the imaging object any further) through the input unit 105, and stores the information as "lens conditions" in the storage unit 101 (at step s103).

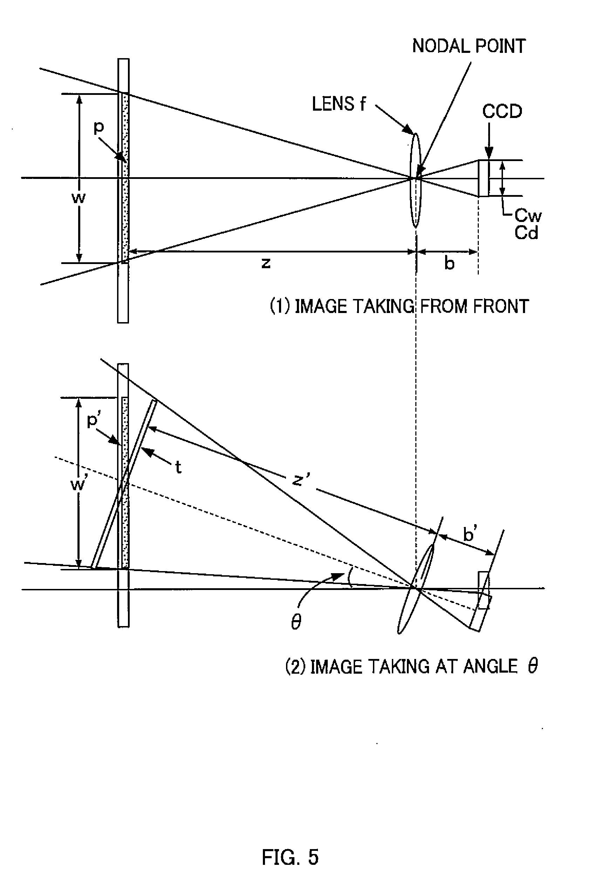

Also, the distance calculator 110 calculates a distance, that is, a camera distance, from the imaging object 5 to the fixed position of the digital camera by a predetermined formula in accordance with the target resolution to be obtained for an image of the imaging object 5, and the CCD resolution of the digital camera 200 and the focal length of the lens 250, and stores the calculated distance in the storage unit 101 (at step s104). Fig. 5 is a schematic illustration of the imaging object 5, the lens 250, and the CCD, as seen from above, in the embodiment, and Parts (1) and (2) of Fig. 5 show a situation where image taking occurs with the digital camera 200 oriented to the front (angle: 0, 0), and a situation where the digital camera 200 is rotated by an angle $\theta$ in the horizontal direction, respectively.

Calculation of the camera distance z from the target resolution will be described, provided that in Part (1) of Fig. 5 the resolution is defined as p; the image taking area, w; the focal length of the lens 250, f; the distance (or the camera distance) from the nodal point to the imaging object 5, z; the distance from the nodal point to the CCD, b; the width of the CCD, Cw; and the number of pixels of the CCD in the width direction, Cd.

Here, a relationship of the focal length f of the lens 250, the camera distance z and the distance b from the nodal point to the CCD is derived from a lens formula thereby to obtain "1/f = 1/z + 1/b," which then can be transformed into and defined as "b = f*z/(z-f)." A relationship between the image taking area w and the width Cw of the CCD is determined by simple ratio calculations from Fig. 5 thereby to obtain "z : b = w : Cw," which then is transformed into "w = z/b*Cw." Meanwhile, calculation of the resolution leads to "p = Cd/w/25.4 mm" = "Cd*25.4 mm/w," since 1 inch is equal to 25.4 mm.

Then, these formulas are combined into "p = Cd*25.4/(z/b*Cw)" = "Cd*25.4*b/(z*Cw)" = "Cd*25.4*(f*z/(z-f))/(z*Cw)" = "(Cd/Cw*25.4)*f/(z-f)." Also, the resolution of the CCD is "Cp = Cd/Cw*25.4," and therefore, the above formula is "p = Cp*f/(z-f)." This formula leads to a formula for determination of the camera distance z, which is "z = Cp*f/p+f." The camera distance z can be determined from this formula, provided that the target resolution p, the CCD resolution Cp and the focal length f of the lens are obtained in advance through the input unit 105. For example, when the target resolution is "1200 dpi," the resolution of the CCD is "4000 dpi" and the focal length f of the lens 250 is "600 mm," the camera distance z is "4000*600/1200 + 600," which is "2600 mm." Incidentally, the distance calculator 110 may execute the process of determining whether or not the camera distance z thus obtained is smaller than the minimum image-taking distance of the lens 250 (previously held as data in the storage unit 101), and displaying information indicating that a corresponding lens is to be excluded from candidates for selection on the output unit 106, when the camera distance z is smaller than the minimum image-taking distance.

Incidentally, Part (2) of Fig. 5 shows the situation where the digital camera 200 is rotated by θ with respect to its center, and, with the camera distance z remaining the same, the resolution becomes lower at a distance farther away from the center. This is expressed in formula form; with the angle θ, the camera distance z' is represented as "z' = z/Cosθ," and, with an angle orthogonal to the angle θ, the resolution t is represented as "t =Cp*f/(z/Cosθf)." Therefore, with the angle θ, the actual resolution p' is "p' = t*Cosθ" = "Cp*f/(z/Cosθ-f)*Cosθ" = "Cp*f*Cos2θ/(z-f*Cosθ)." From this formula, it can be seen that, as the angle θ becomes larger (that is, at a distance farther away from the center), the image taking area becomes wider, and accordingly, the resolution becomes lower. This is a characteristic of the single-viewpoint image taking, and this calculation formula may be used to set the lowest resolution in the image taking area as the target resolution and create an image taking plan.

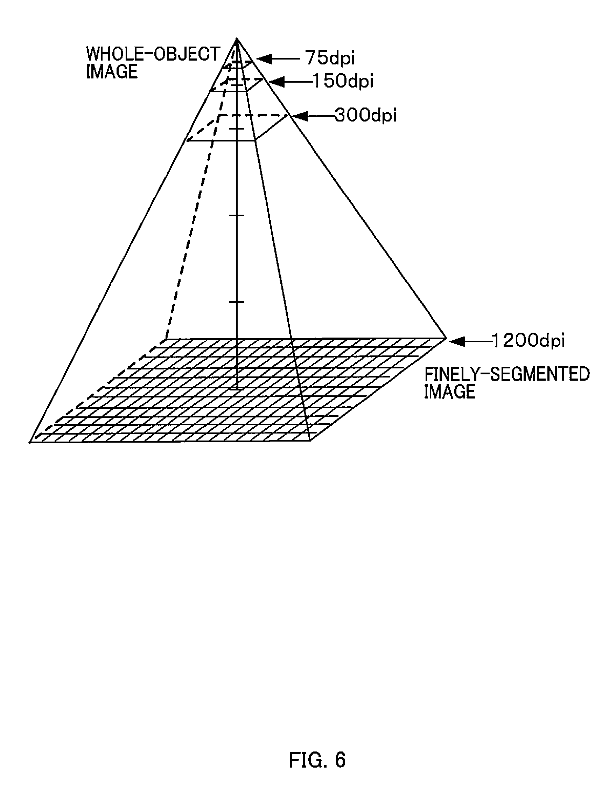

Then, the resolution setting unit 111 of the computer 100 sets hierarchal resolutions ranging from a resolution of a captured image of the whole imaging object to the target resolution, and stores the set resolutions in the storage unit 101 (at step s105). At this time, preferably, the resolution setting unit 111 sets hierarchal resolutions ranging from a resolution of a captured image of the whole imaging object to the target resolution, by setting a higher scaling factor from one to another of the resolutions as the resolution becomes higher. As shown for example in Fig. 6, when the target resolution is set to "1200 dpi (dots per inch)," a subsequent resolution is set to a resolution of "300 dpi," which is 1/4 of "1200 dpi, " and further, the following subsequent resolution is set to a resolution of "150 dpi," which is 1/2 of "300 dpi, " and further, the next following subsequent resolution is set to a resolution of "75 dpi, "which is 1/2 of "150 dpi." (In this example, after "300 dpi, " the scaling factor from one to another of the resolutions changes from 2 times to 4 times.)

Then, the frame layout unit 112 of the computer 100 executes a process for each of the resolutions stored in the storage unit 101, and the process involves forming segment frames into which an image taking area is segmented by dividing an angle of view of the image taking area by a predetermined angle, laying out the segment frames so that focus areas in respective segment frames overlap, and storing information on at least a layout of the segment frames and a corresponding resolution as a segmented image taking plan in the storage unit 101. At this time, the frame layout unit 112 may execute a process that involves forming segment frames into which an image taking area is segmented by dividing an angle of view of the image taking area by a predetermined angle, calculating confusion circle diameters in each of the segment frames, determining that a area where the confusion circle diameters are equal to or smaller than the allowable confusion circle diameter is a focus area in the segment frame, and laying out the segment frames so that the focus areas in respective segment frames overlap.

The process by the frame layout unit 112 will be described in detail below. First, the frame layout unit 112 sets a resolution of a segmented image taking plan to be created as a target resolution (at step s106), and calculates a layout of an image taking area for segmented image taking (hereinafter called segment frames) (at step s107). Here, for the segmented image taking with the target resolution, the focal length of the lens 250, the camera distance, and the size and the number of pixels of the CCD are fixed values, and the segment frames are determined by determining the orientation of the digital camera 200. Also, the segment frames can be automatically calculated and arranged in the form of tile placement in the image taking area of the whole imaging object by specifying a minimum overlap ratio (hereinafter called a minimum overlap). The reason for a need for information on the minimum overlap is that, when the overlap ratio of the segment frames becomes less than zero, merging cannot be performed in the image merging processing. Therefore, the user specifies the minimum overlap through the input unit 105, allowing for an error in machine accuracy of the motor-driven pan head 300, while the frame layout unit 112 receives the specified minimum overlap and stores it in the storage unit 101.

First, the frame layout unit 112 arranges the segment frames equiangularly. Here, as the segment frames are farther away from the center of the image taking area of the whole imaging object, the segment frames in themselves become larger by being subjected to perspective correction. (The resolution becomes lower since the size of the CCD is fixed.) In this case, however, the segment frames all have the same angle of view (that is, the angle at which the segment frames become wider as seen from the digital camera 200). Therefore, the angle of view of the image taking area of the whole imaging object is segmented by the angle of view of the segment frames thereby to obtain a layout in which the segment frames are uniformly arranged in the image taking area of the whole imaging object.

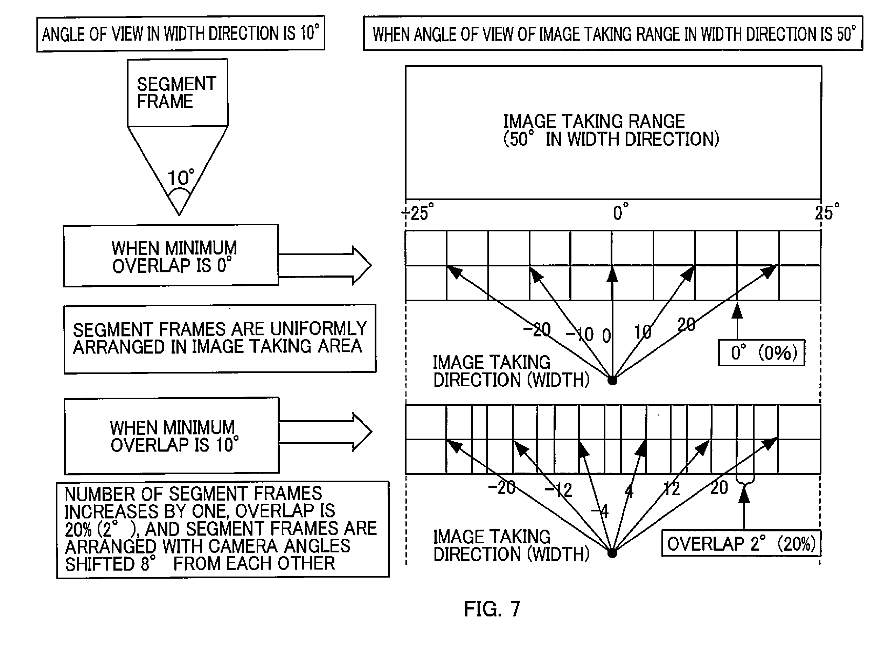

Then, the frame layout unit 112 performs calculation of a first layout, using an image taking angle and an angle of view of the digital camera 200. For example, it is assumed that the angle of view of the image taking area of the whole imaging object in the width direction is "50°, " the angle of view of the segment frames in the width direction is "10°," and the minimum overlap is "0°." In this case, for example, attention is given to the width direction of the imaging object; when the segment frames are arranged with camera angles shifted "10°" from each other in the width direction, five segment frames can be laid out in the image taking area of the whole imaging object. (See Fig. 7.) At this time, a calculation formula is "(50-0)/(10-0) = 5," which is the number of segment frames. Also, when the minimum overlap is set to 10%, the actual overlap is 20% (or 2°), and, when the segment frames are arranged with camera angles shifted "8°" from each other in the width direction, six segment frames can be laid out in the image taking area of the whole imaging object. At this time, the calculation formula is "(50-1)/(10-1) = 5.4" and, actually, "(50-x)/(10-x) = 6," which is the number of segment frames, thus leading to "x = (60-50)/5 = 2," which is the actual overlap.

The frame layout unit 112 executes this layout method on the imaging object also in its height direction thereby to lay out the segment frames in the image taking area of the whole imaging object.

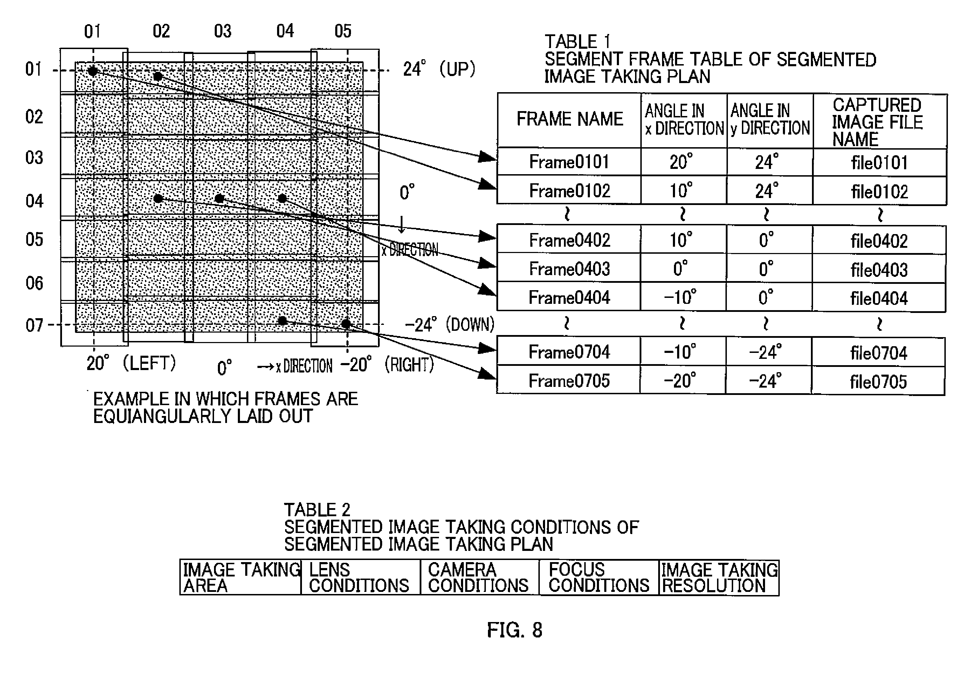

Next, an example will be given in which the camera angle rather than the angle of view is equally divided to lay out segment frames. (See Fig. 8.) In the example shown in Fig. 8, the segment frames are uniformly arranged by being shifted 10° in the width (x) direction and 8° in the height (y) direction with respect to the image taking area (that is, the gray colored area in Fig. 8). The segment frames are not aligned vertically and horizontally because, as the segment frames are farther away from the center, the segment frames become larger in size by being subjected to perspective correction. Also, information required to take segmented images by use of this layout of the segment frames and record the captured images includes a frame name for unique identification of each of the segment frames, angles of rotation of the camera in the x and y directions, and a file name for identification of each of captured image files, which are set by the frame layout unit 112 executing naming and numbering processes under a predetermined algorithm. Table 1 of Fig. 8 shows an example of a table (held in the storage unit 101) that records the information required for the image taking of the segment frames.

In the example shown in Table 1, numbers are assigned to rows and columns of the segment frames, starting at the upper left of the image taking area, and frame names are assigned to the segment frames so that layout positions can be readily seen ("Frame + row number + column number"). Also, the angle of the digital camera 200 in a position in which the digital camera 200 opposes the imaging object (that is, in the center of the imaging object) is such that x = 0° and y = 0°, and a positive angle (+) is set in an upper left direction and a negative angle (-) is set in a lower right direction, thereby to set the camera angle. In the example shown in Table 1, the camera angle is such that x = 0° and y = 0° at an angle at which "Frame0403" faces the center of the imaging object 5.

Also, for the segmented image taking, the segmented image taking plan records also image taking conditions described previously (such as image taking resolutions, an image taking area, lens conditions, camera conditions, and focus conditions) (See Table 2 in Fig. 8).

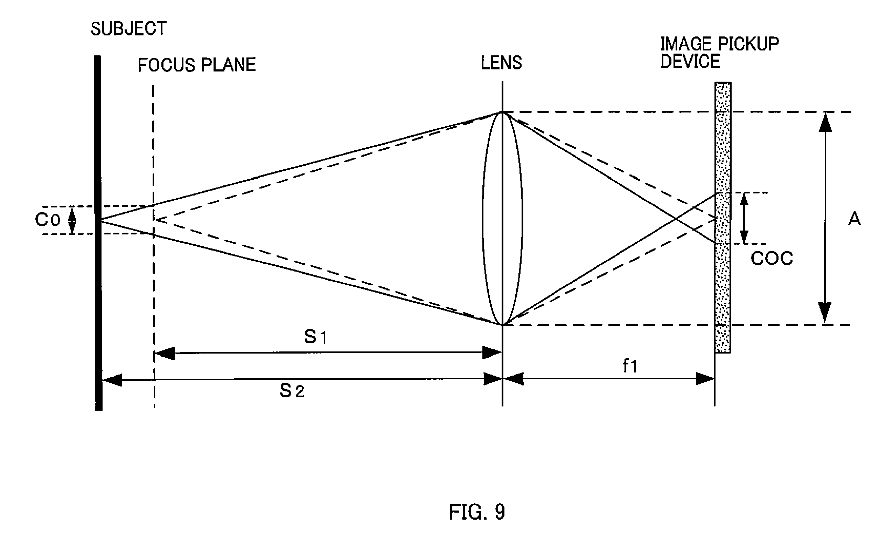

Next, description will be given with regard to a process for calculating an in-focus area (step s108), executed by the frame layout unit 112. In the present embodiment, an area where the confusion circle diameters are equal to or less than a given value is defined as the in-focus area, that is, a focus area. The calculation formula of the circle of confusion is given below. Also, a concept of the calculation of the circle of confusion is shown in Fig. 9. In the formula, the confusion circle diameter is described as "COC" (circle of confusion).

$$COC = \frac{|S_2 - S_1|}{S_2} \frac{f^2}{N(S_1 - f)} \qquad (1)$$

Formula (1) is derived from the following equation.

$$C_0 = \frac{|S_2 - S_1|}{S_2} A \qquad (2)$$

Equation (2) is based on the equation of similar triangles, and $S_2$ denotes distance from the subject to the lens; $f_1$, distance from the lens to the image pickup device; $S_1$, position (that is, an in-focus position) in which focus is obtained on the position of the image pickup device; and A, lens aperture.

$$COC = C_0 \frac{f_1}{S_1} \qquad (3)$$

A relationship between the confusion circle diameter COC and $C_0$ is derived from calculation of lens magnification.

$$\frac{1}{f} = \frac{1}{f_1} + \frac{1}{S_1} \Longrightarrow f_1 = \frac{f \cdot S_1}{S_1 - f} \qquad (4)$$

Formula (4) is derived from a lens equation when the focal length on a point at infinity is defined as f.

$$N = \frac{f}{A} \qquad (5)$$

When an f-number is defined as N, Formula (5) is derived from a relational expression of the f-number N, the focal length f and the lens aperture A.

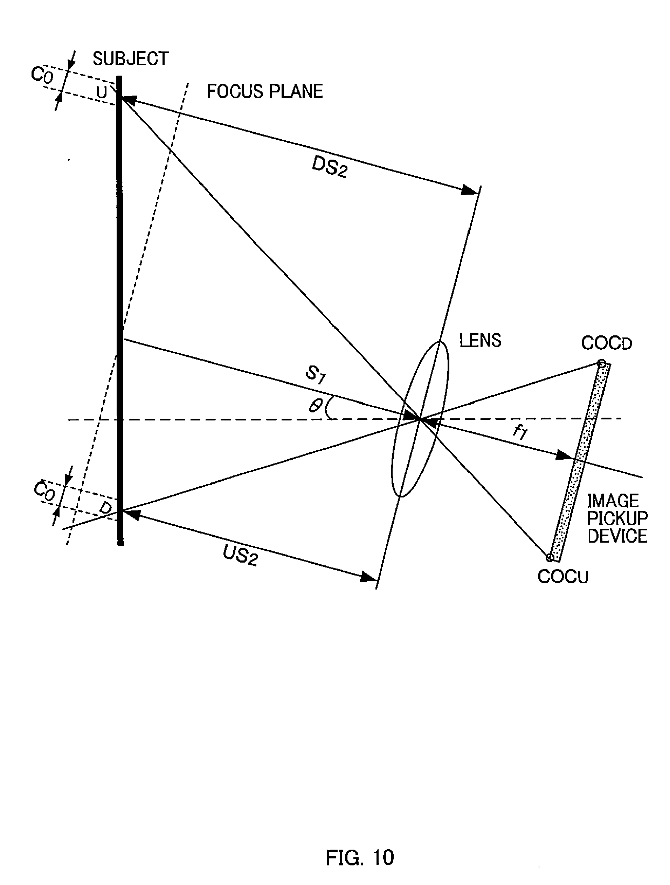

Here, in the present embodiment, the digital camera 200 is rotated on the nodal point of the lens 250 to perform image taking of segment frames. Fig. 10 shows a conceptual illustration of calculation of a focus area (or calculation of a circle of confusion) when the digital camera 200 is rotated. Fig. 10 shows a representation of a relationship between the image pickup device (that is, the CCD) and the subject when the digital camera 200 is rotated by $\theta°$ in the vertical direction. The distances from subject positions U and D corresponding to ends of the image pickup device to the lens are defined as $US_2$ and $DS_2$, respectively; the distance from the lens to the image pickup device, $f_1$; and the distance from the position (or a focus plane) in which focus is obtained on the position of the image pickup device to the image pickup device, $S_1$. Also, it is assumed that the digital camera 200 is focused on an area equivalent to a central portion of the image pickup device.

Also in this case, Formula (1) can be used to determine the confusion circle diameter (COC). For example, the subject positions U and D can be calculated in the following manner.

$$COC_U = \frac{|US_2 - S_1|}{US_2} \frac{f^2}{N(S_1 - f)} \qquad (6)$$

$$COC_D = \frac{|DS_2 - S_1|}{DS_2} \frac{f^2}{N(S_1 - f)} \qquad (7)$$

Also, for any position other than the subject positions U and D, the distance between the lens and the subject can be determined by geometric calculation using trigonometric functions, to thus enable determine the confusion circle diameter COC in every position in the area (or the segment frames) to be subjected to segmented image taking. In Fig. 10, the confusion circle diameter COC in the central portion of the image pickup device is zero, and the value of the confusion circle diameter COC becomes larger at a distance farther away from the center. In other words, the subject goes out of focus.

After all, the focus area in the segment frame can be determined by calculating the size of the circle of confusion from Formula (1), provided that the angle of the digital camera 200 in the segment frame (that is, $\theta$ in Fig. 10, which is the angle of rotation with respect to the center of the imaging object 5) is determined. At this time, the values on which the focus area depends are the size of the circle of confusion judged as being in focus, that is, the allowable confusion circle diameter, the f-number, and the angle of rotation of the digital camera 200. As the f-number and the allowable confusion circle diameter become larger, the focus area becomes wider, while as the angle of rotation of the digital camera 200 becomes larger, the focus area becomes smaller.

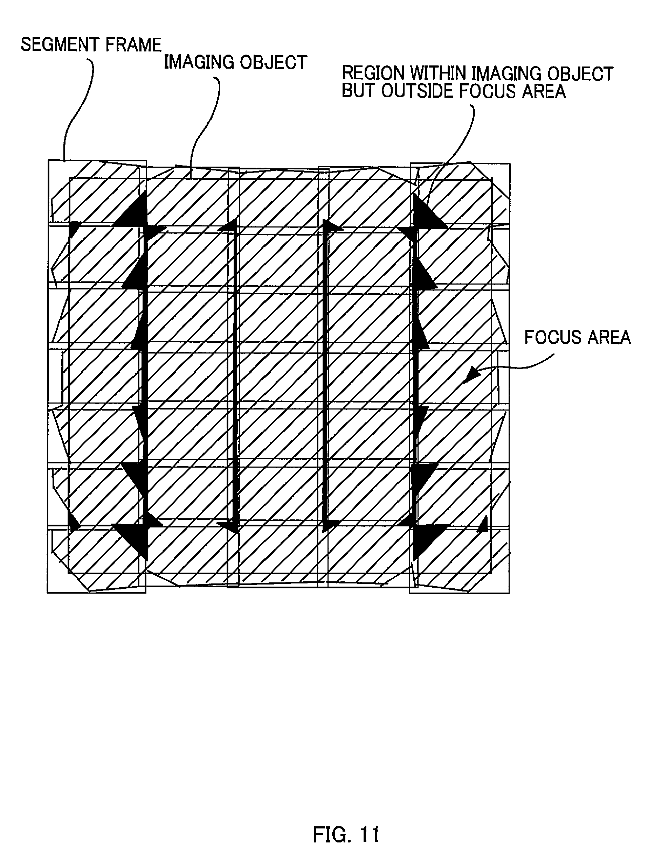

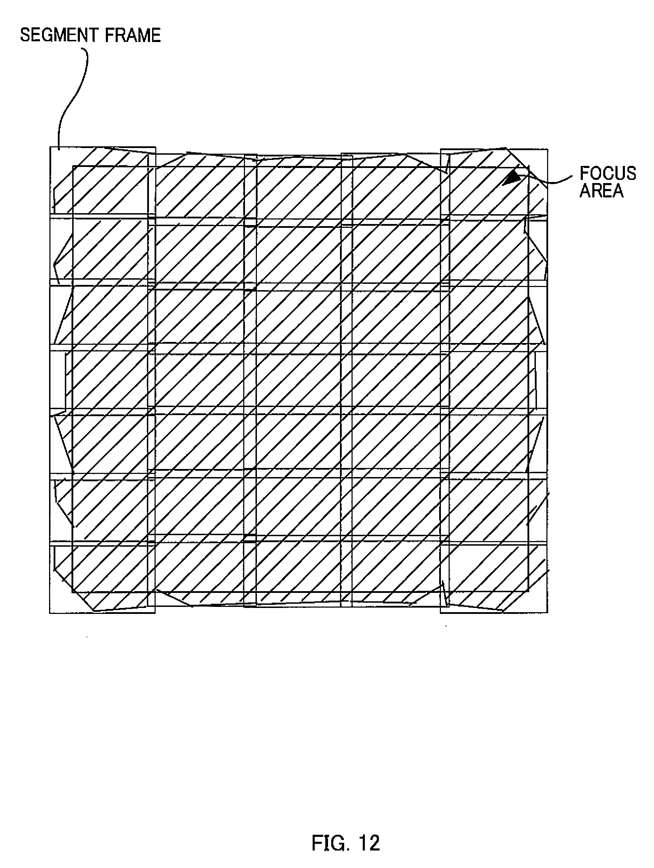

Also, the frame layout unit 112 determines the allowable confusion circle diameter and the f-number. The frame layout unit 112 calculates the confusion circle diameter COC in each of the segment frames uniformly laid out as described previously, by using Formula (1), determines the value of the allowable confusion circle diameter, and determines that an area where the confusion circle diameters COC are equal to or smaller than the value is the focus area. Fig. 11 shows the calculated result of the focus area in each of the segment frames uniformly laid out. In Fig. 11, the hatched area is the focus area in each of the segment frames, and the gray area is a region that falls outside the focus area although the region is the imaging object. Meanwhile, Fig. 12 shows an example in which the segment frames are laid out so that the focus areas shown in Fig. 11 overlap. Image taking of the segment frames is performed based on a layout of the segment frames shown in Fig. 12 thereby to enabling to obtain a merged image having no out-of-focus portion. An embodiment will be given below in which the segment frames are laid out so that the focus areas shown in Fig. 12 overlap.

Here, for example, the frame layout unit 112 arranges a segment frame at the center of the image taking area, and calculates and arranges the focus areas of neighboring segment frames so that the focus areas of the neighboring segment frames overlap with the focus area of the center segment frame (at step s109). Also, the frame layout unit 112 synthesizes the focus areas of a group of the segment frames arranged around the center segment frame, thereby to determine that the synthesized focus area is the center focus area (at step s110). The frame layout unit 112 arranges the segment frames in sequence from the center to the periphery so that the focus areas overlap, until the center focus area here determined covers the whole image taking area, thereby to lay out the segment frames so that (the edges of) the focus areas of all segment frames overlap ("No" at step s111 -> step s109 -> step s110 -> "Yes" at step s111). On the other hand, when the determined center focus area covers the image taking area ("Yes" at step s111), the frame layout unit 112 determines that proper arrangement of the segment frames in the image taking area for the segmented image taking plan having the target resolution has been finished, and retains information on the segmented image taking plan (that is, data contained in Tables 1 and 2 shown in Fig. 8) in the storage unit 101 (at step s112).

The frame layout unit 112 repeatedly executes steps s108 to s112 until the steps are completed for all resolutions stored in the storage unit 101 (or all segmented image taking plans having the resolutions) ("No" at step s113 -> step s114 -> steps s108 to s112 -> "Yes" at step s113). The process for creating the segmented image taking plan is thus executed.

Incidentally, among the above-described image taking area, camera conditions, lens conditions and focus conditions and the like, the image taking area is always to be set for each imaging object, and other conditions are values uniquely determined by determining the digital camera 200 or the lens 250. Therefore, in the embodiment, the conditions of the digital camera 200 or the lens 250 for use may be registered (as a database) in the storage unit 101 of the computer 100 in order for the computer 100 to retrieve and select an optimum one in accordance with the target resolution and the image taking area specified through the input unit 105. (For example, the computer 100 selects the digital camera 200, the lens 250 or the like having the camera conditions, the lens conditions or the focus conditions for a target resolution of "1200 dpi.") Alternatively, specific combinations of conditions may be named and held in the storage unit 101 in order for the computer 100 to select a corresponding combination of conditions in accordance with specified conditions through the input unit 105 (for example, a "1200-dpi image taking set," a "600-dpi image taking set," and the like).

Example 2 of processing procedure

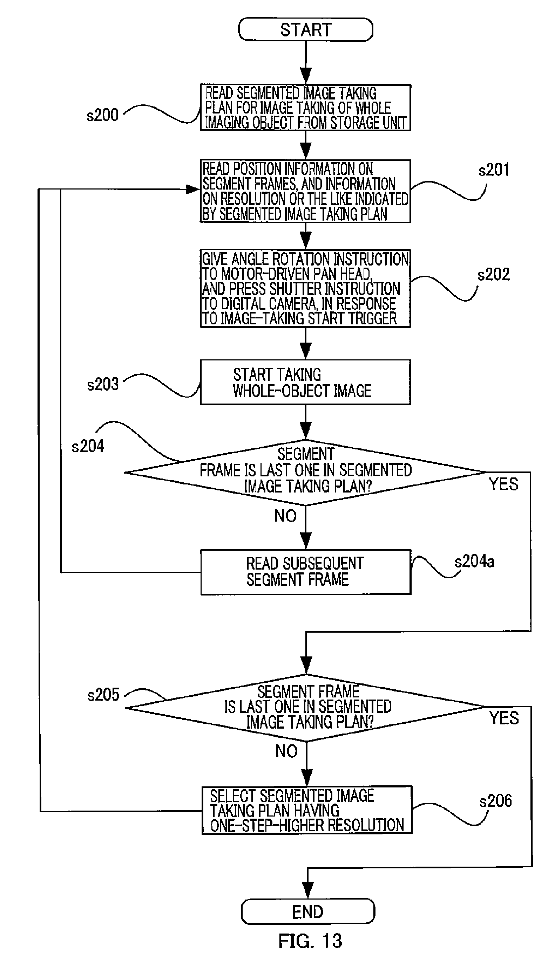

Fig. 13 is a flowchart showing example 2 of the operational flow of the imaging method of the present embodiment. Next, description will be given with regard to a segmented image taking process based on a segmented image taking plan. In this case, the segmented image taking instruction unit 113 of the computer 100 transmits an instruction to take an image from a single viewpoint for the position of each of the segment frames for each of the resolutions, based on the segmented image taking plan containing the layout information and the resolution information stored in the storage unit 101, to the digital camera 200 and the motor-driven pan head 300 fixed at the above-described distance, that is, the camera distance, from the imaging object 5, acquires a segmented image taken for each of the segment frames for each of the resolutions from the digital camera 200, and stores the acquired segmented image in the storage unit 101. Process by the segmented image taking instruction unit 113 will be described in detail below.

Although image taking starting with a segmented image taking plan having any resolution does not the affect merging processing of segmented images, in the embodiment, description will be given with regard to a procedure for image taking starting with a segmented image taking plan having a low resolution. The segmented image taking instruction unit 113 of the computer 100 receives an instruction from the user through the input unit 105, reads a segmented image taking plan for image taking of the whole imaging object from the storage unit 101, and displays the segmented image taking plan on the output unit 106 (at step s200). The user places the corresponding digital camera 200, lens 250 and motor-driven pan head 300 in an accurate position (or the position corresponding to the camera distance) in which they oppose the center of the imaging object 5, in accordance with image taking conditions indicated by the segmented image taking plan (which are data indicated for a corresponding resolution by Tables 1 and 2 shown in Fig. 8, including such as image taking resolutions, an image taking area, lens conditions, camera conditions, and focus conditions).

Then, the segmented image taking instruction unit 113 of the computer 100 reads position information on segment frames, and resolution or the like information, indicated by the segmented image taking plan (at step s201). In response to an image-taking start trigger received from the user through the input unit 105, the segmented image taking instruction unit 113 gives an instruction for an angle of rotation of the movable portion 303 to the motor-driven pan head 300 according to the position information on the segment frames, gives a zoom instruction to a lens zoom mechanism of the digital camera 200 so as to set a focal length according to the resolution (ex. 75 dpi), and gives a shutter press instruction to the digital camera 200, thereby to orient the lens of the digital camera 200 to the center of the imaging object 5 (at step s202) and start taking a whole-object image (at step s203).

The digital camera 200 acquires captured image data by performing image taking, assigns a name that can uniquely identify a captured image to the captured image data, and stores the image data in a storage medium such as a flash memory. The "name that can uniquely identify an image" may be envisaged as "resolution value + segment frame number" or the like, for example. Incidentally, here, the segmented image taking plan of interest is the plan for taking the whole-object image of the imaging object (that is, the number of images taken is one), and, with a resolution of 75 dpi, an image name such as "Plan75-f0001" may be assigned to the image data. Alternatively, the segmented image taking instruction unit 113 of the computer 100 may communicate with the digital camera 200 to acquire captured image data for each image taken by the digital camera 200, assign a name that can uniquely identify an image to the captured image data, and store the image data in the storage unit 101.

Incidentally, the digital camera 200 records a corresponding captured image name in the storage medium, for a segment frame that has undergone image taking, among the segment frames indicated by the segmented image taking plan. In other words, a list of correspondences between the segment frames and captured images related thereto is created. (However, if the image name in itself contains a segment frame name as is the case with the above-described example, each image name may merely be extracted without the need to create a new list.) The digital camera 200 may transfer a list of correspondences between the segment frames and the captured image names obtained therefor to the computer 100. In this case, the segmented image taking instruction unit 113 of the computer 100 receives the correspondence list and stores the correspondence list in the storage unit 101.

When the taking of the whole-object image of the imaging object 5 is completed as described above ("Yes" at step s204), a segmented image taking plan having a target resolution is not finished ("No" at step s205), and therefore, the segmented image taking instruction unit 113 of the computer 100 selects a segmented image taking plan having a one-step-higher resolution than that of the segmented image taking plan for taking the whole-object image, from the storage unit 101 (at step s206), and returns the processing to step s201.

Then, the segmented image taking instruction unit 113 of the computer 100 reads a first segment frame indicated by the segmented image taking plan (for example, in ascending or descending order of numeric characters or characters contained in the names of the segment frames, or the like) from the storage unit 101, and reads position information indicated by the first segment frame, and resolution or the like information (at step s201). The segmented image taking instruction unit 113 gives an instruction for an angle of rotation of the movable portion 303 to the motor-driven pan head 300 according to the position information on the first segment frame, gives a zoom instruction to the lens zoom mechanism of the digital camera 200 so as to set a focal length according to the resolution, and gives a shutter press instruction to the digital camera 200, thereby to orient the lens of the digital camera 200 to the first segment frame (at step s202) and start segmented image taking (at step s203).

The digital camera 200 acquires captured image data, that is, segmented image data, by performing image taking, assigns a name that can uniquely identify a captured image to the segmented image data, and stores the image data in a storage medium such as a flash memory. The "name that can uniquely identify an image" may be envisaged as "resolution value + segment frame number" or the like, for example. The segmented image taking plan of interest is the plan having a resolution of "150 dpi," and, if the first segment frame is assigned "f0001, a segmented image name such as "Plan150-f0001" may be assigned to the image data. Alternatively, the segmented image taking instruction unit 113 of the computer 100 may communicate with the digital camera 200 to acquire segmented image data for each image taking by the digital camera 200, assign a name that can uniquely identify an image to the segmented image data, and store the image data in the storage unit 101. As is the case with the above, the digital camera 200 records a corresponding segmented image name in the storage medium, for a segment frame that has undergone image taking, among the segment frames indicated by the segmented image taking plan.

When the taking of the first segment frame by the segmented image taking plan having a resolution of "150 dpi" is completed as described above but segment frames still remain ("No" at step s204), the segmented image taking instruction unit 113 of the computer 100 reads a subsequent segment frame (for example, in ascending or descending order of numeric characters or characters contained in the names of the segment frames, or the like) from the storage unit 101 (at step s204a), and reads position information indicated by the subsequent segment frame, and resolution or the like information (at step s201). The segmented image taking instruction unit 113 gives an instruction for an angle of rotation of the movable portion 303 to the motor-driven pan head 300 according to the position information on the subsequent segment frame, gives a zoom instruction to the lens zoom mechanism of the digital camera 200 so as to set a focal length according to a resolution of "150 dpi," and gives a shutter press instruction to the digital camera 200, thereby to orient the lens of the digital camera 200 to the subsequent segment frame (at step s202) and execute segmented image taking (at step s203).

The digital camera 200 acquires segmented image data by performing image taking, assigns a name that can uniquely identify a captured image to the segmented image data, and stores the image data in a storage medium such as a flash memory. The segmented image taking plan of interest is the plan having a resolution of "150 dpi," and, if the subsequent segment frame is assigned "f0002," a segmented image name such as "Plan150-f0002" may be assigned to the image data. Alternatively, the segmented image taking instruction unit 113 of the computer 100 may communicate with the digital camera 200 to acquire segmented image data for each image taking by the digital camera 200, assign a name that can uniquely identify an image to the segmented image data, and store the image data in the storage unit 101. As is the case with the above, the digital camera 200 records a corresponding segmented image name in the storage medium, for a segment frame that has undergone image taking, among the segment frames indicated by the segmented image taking plan.

Thus, when the taking of the segment frames by the segmented image taking plan having a resolution of "150 dpi" is executed as described above and the taking of the last segment frame is finally completed ("Yes" at step s204), the segmented image taking instruction unit 113 of the computer 100 determines whether the segmented image taking plan having the target resolution is finished (at step s205). Of course, in the example of the embodiment, segmented image taking plans having a resolution of "300 dpi" and a resolution of "1200 dpi" still remain ("No" at step s205), and therefore, the segmented image taking instruction unit 113 selects the segmented image taking plan having a one-step-higher resolution of "300 dpi" than that of the segmented image taking plan having a resolution of "150 dpi, " from the storage unit 101 (at step s206), and returns the processing to step s201.

When, as a result of repeated execution of the above process, image taking for the segmented image taking plan having a target resolution of "1200 dpi" is completed ("Yes" at step s205), the segmented image taking instruction unit 113 brings the processing to an end.

Example 3 of processing procedure

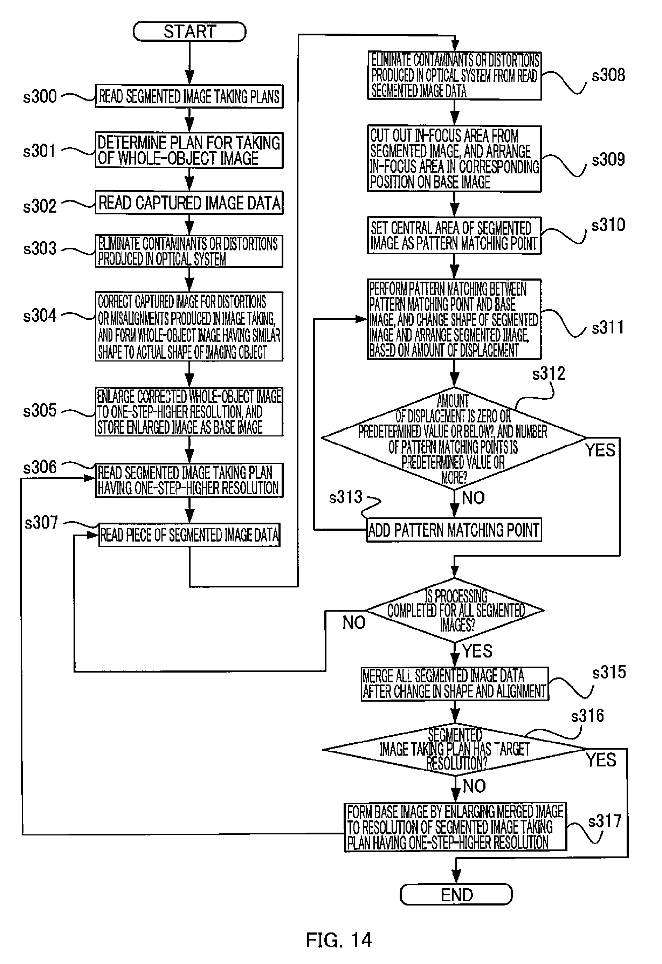

Fig. 14 is a flowchart showing example 3 of an operational flow of the imaging method of the present embodiment. Next, description will be given with regard to merging processing of segmented images taken based on a segmented image taking plan. In this case, the segmented image merging unit 114 of the computer 100 executes a process for each of the segmented image taking plans stored in the storage unit 101, and the process involves reading each of the captured images obtained by a predetermined segmented image taking plan from the storage unit 101, forming a base image by enlarging the captured image to the same resolution as that of a segmented image taking plan having a one-step-higher resolution of the hierarchal resolutions, determining a corresponding area on the base image for each of segmented images obtained by the segmented image taking plan having the one-step-higher resolution, based on the position of each of the segmented images, merging the segmented images together by aligning each of the segmented images through pattern matching between the segmented image and the base image, and storing a merged image in the storage unit 101. An example of the process by the segmented image merging unit 114 will be described in detail below.

In the example of the present embodiment, first, the segmented image merging unit 114 reads segmented image taking plans from the storage unit 101 (at step s300), and selects a plan for the taking of the whole-object image of the imaging object 5, that is, a segmented image taking plan having a minimum resolution of "75 dpi," from the segmented image taking plans (at step s301). Also, the segmented image merging unit 114 reads captured image data stored in the storage unit 101 for the segmented image taking plan having a resolution of "75 dpi" (at step s302), and executes a process for eliminating contaminants or distortions produced in an optical system (at step s303). The process for eliminating the contaminants or distortions involves executing the process like eliminating the contaminants present between the lens and the image pickup device of the camera, or the process of correcting the distortions produced in the lens or a diaphragm, on the captured image data. Conventional technologies may be adopted for these corrections.

Then, the segmented image merging unit 114 corrects the whole-object image for distortions or misalignments produced during image taking, thereby to form a whole-object image having a similar shape to the actual shape of the imaging object 5 (at step s304). This correction may be envisaged for example as perspective correction, which involves setting the resolution of the shape of the imaging object 5 obtained by actual measurement thereof to the same resolution as that of the whole-object image, and changing the shape of the whole-object image so that four points (for example, four corners of a picture frame) of the whole-object image coincide with those of the imaging object 5.

Also, the segmented image merging unit 114 enlarges the whole-object image corrected at step s304 to a resolution of "150 dpi" indicated by a segmented image taking plan having a one-step-higher resolution, and stores an enlarged image thus obtained as a base image in the storage unit 101 (at step s305).

Then, the segmented image merging unit 114 reads the segmented image taking plan having the one-step-higher resolution, that is, a resolution of "150 dpi, " from the storage unit 101 (at step s306), and reads a piece of segmented image data stored in the storage unit 101 for the read segmented image taking plan, according to a predetermined rule (e.g. in descending or ascending order of the file names, or the like) (at step s307). Of course, the segmented image data here read is raw data that is not yet subjected to subsequent processing. (An unprocessed status may be managed by a flag or the like.)

Then, the segmented image merging unit 114 executes a process for eliminating contaminants or distortions produced in the optical system, on the segmented image data read at step s307 (at step s308). This process is the same as the process of step s303 described above. Also, the segmented image merging unit 114 cuts out an in-focus area from the segmented image, and arranges the in-focus area in a corresponding position on the base image (at step s309). Conventional image processing technology may be adopted for a process for cutting out the in-focus area. Also, arrangement of the segmented image in the corresponding position on the base image can be accomplished for example in the following manner. Information on the angle of rotation of the digital camera 200 and the camera distance (fixed regardless of a segment frame or a segmented image taking plan) in image taking of a segment frame (whose name, such as "f0001," can be determined from the segmented image name) for the segmented image is read from information on a corresponding segmented image taking plan. The position of a corresponding segmented image on an imaging object plane can be calculated based on the read information. Therefore, the segmented image can be arranged in a position (ex. the same coordinate values on plane coordinate systems on a base image plane) on the base image corresponding to the calculated position (ex. coordinate values on plane coordinate systems on the target imaging plane).

Then, the segmented image merging unit 114 sets a central area (such as a rectangular area having a predetermined number of pixels) of the segmented image as a pattern matching point (at step s310). Also, the segmented image merging unit 114 performs pattern matching between the set pattern matching point and the base image, and changes the shape of the segmented image and arranges the segmented image, based on the amount of displacement of each pattern matching point (at step s311). In this case, the segmented image merging unit 114 performs pattern matching with the base image at a position that overlaps with the central area of the segmented image as the pattern matching point, and, for example when pixels are displaced from each other although the pixels are derived from the same image taking point, the segmented image merging unit 114 determines a distance between the pixels, that is, the amount of displacement, and shifts the segmented image on the base image by the amount of displacement in a direction in which the position of a target pixel of the segmented image coincides with the position of a corresponding pixel of the base image (that is, perspective correction).

When the amount of displacement is not equal to zero or is not equal to or less than a predetermined value and the number of pattern matching points previously set is not equal to or more than a predetermined value (for example, the number of pattern matching points is not equal to or more than 16) ("No" at step s312), for example, the segmented image merging unit 114 divides the segmented image in the shifted position into four regions, and adds central areas of the divided regions as pattern matching points (at step s313). Then, the segmented image merging unit 114 performs pattern matching between each of the four pattern matching points and the base image, and determines the amount of displacement and performs perspective correction on the four points, in the same manner as described above (at step s311). As in the case above, when the amount of displacement here is not equal to zero or is not equal to or less than the predetermined value and the number of pattern matching points previously set is not equal to or more than the predetermined value ("No" at step s312), the segmented image merging unit 114 further divides the perspective-corrected segmented image into 16 regions (at step s313), performs pattern matching between each of central areas of the divided regions and the base image, and determines the amount of displacement and performs perspective correction on 16 points in the same manner (at step s311).

The segmented image merging unit 114 performs the above process until the "amount of displacement" becomes equal to zero or becomes equal to or less than the predetermined value and the number of pattern matching points previously set becomes equal to or more than the predetermined value ("No" at step s312 -> steps s310 and s311 -> "Yes" at step s312), so that the segmented image has the same shape as that of the corresponding area of the base image.

The segmented image merging unit 114 repeatedly executes the processing from steps s307 to s312 (or s313) until processing for all segment frames for a corresponding segmented image taking plan is completed ("No" at step s314 -> step s307). On the other hand, when the processing from steps s307 to s312 (or s313) is repeatedly executed and, consequently, the processing for all segment frames for the corresponding segmented image taking plan is completed ("Yes" at step s314), the segmented image merging unit 114 recognizes that perspective correction and alignment of all segmented images are completed, and performs merging processing of all segmented images that have finished changes in their shapes (that is, perspective correction) and alignment (at step s315).

Then, when the segmented images merged at step s315 are not those obtained by a segmented image taking plan having a target resolution ("No" at step s316), the segmented image merging unit 114 forms a base image by enlarging the merged segmented images to a resolution of a segmented image taking plan having a subsequent resolution of "300 dpi" (at step s317).

Then, the segmented image merging unit 114 returns the processing to step s306, and repeatedly executes the processing from steps s306 to s315 in the same manner for each segmented image taking plan having each of the resolutions. Finally, when the segmented images merged at step s315 are those obtained by the segmented image taking plan having the target resolution ("Yes" at step s316), the segmented image merging unit 114 stores the segmented images finally merged as a merged image having the target resolution in the storage unit 101, and brings the processing to an end.

At least the following will be apparent from the disclosure of this specification. Specifically, the resolution setting unit of the imaging system may hierarchically set resolutions ranging from a resolution of a captured image of the whole imaging object to the target resolution, by setting a higher scaling factor from one to another of the resolutions as the resolution becomes higher, and store the set resolutions in the storage unit.

Also, the frame layout unit of the imaging system may execute a process for each of the resolutions stored in the storage unit, and the process involves forming segment frames into which an image taking area is segmented by dividing an angle of view of the image taking area by a predetermined angle, calculating confusion circle diameters in each of the segment frames, determining that an area where the circles of confusion have a diameter equal to or smaller than an allowable circle of confusion is a focus area in the segment frame, laying out the segment frames so that the focus areas in respective segment frames overlap, and storing information on at least a layout of the segment frames and a corresponding resolution as a segmented image taking plan in the storage unit.

As described above, according to the embodiments, segmented image taking and merging processing of segmented images with logical consistency can be achieved with high efficiency at low cost to thereby enabling easy formation of a high-definition merged image.

Although the present invention has been specifically described above based on the embodiments thereof, it is to be understood that the invention is not limited to these embodiments, and various changes and modifications could be made thereto without departing from the basic concept and scope of the invention.

**Claims**

1.  An imaging system including a computer communicatively coupled to a digital camera and a motor-driven pan head therefor and configured to control image taking by the digital camera, the computer comprising:

    a distance calculator that calculates a distance from an imaging object to a fixed position of the digital camera by using a predetermined formula in accordance with a target resolution to be obtained for an image of the imaging object, an image pickup device resolution of the digital camera, and a focal length of a lens, and stores the calculated distance in a storage unit;
    a resolution setting unit that sets hierarchal resolutions ranging from a resolution of a captured image of the whole imaging object to the target resolution, and stores the set resolutions in the storage unit;
    a frame layout unit that executes a process for each of the resolutions stored in the storage unit, the process including forming segment frames into which an image taking area is segmented by dividing an angle of view of the image taking area by a predetermined angle, laying out the segment frames so that focus areas in respective segment frames overlap, and storing information on at least a layout of the segment frames and the corresponding resolution as a segmented image taking plan in the storage unit;
    a segmented image taking instruction unit that transmits an instruction to take an image from a single viewpoint for the positions of the respective segment frames for each of the resolutions, based on the segmented image taking plan containing the layout information and the resolution information stored in the storage unit, to the digital camera and the motor-driven pan head fixed at the distance from the imaging object, acquires segmented images taken for the respective segment frames for each of the resolutions from the digital camera, and stores the acquired segmented image in the storage unit; and
    a segmented image merging unit that executes a process for each of the segmented image taking plans stored in the storage unit, the process including reading each of captured images of a predetermined segmented image taking plan from the storage unit, forming a base image by enlarging the captured image to the same resolution as that of a segmented image taking plan having a one-step-higher resolution among the hierarchal resolutions, determining a corresponding area on the base image for each of segmented images of the segmented image taking plan having the one-step-higher resolution, based on the position of the segmented image, merging the segmented images together by aligning each of the segmented images through pattern matching between the segmented image and the base image, and storing a merged image in the storage unit.

2.  The imaging system according to claim 1, wherein
    the resolution setting unit sets hierarchal resolutions ranging from a resolution of a captured image of the whole imaging object to the target resolution, by setting a higher scaling factor between resolutions as the resolutions become higher, and stores the set resolutions in the storage unit.

3. The imaging system according to claim 1, wherein
the frame layout unit executes a process for each of the resolutions stored in the storage unit, the process including forming segment frames into which an image taking area is segmented by dividing an angle of view of the image taking area by a predetermined angle, calculating diameters of circles of confusion in each of the segment frames, determining that an area in which circles of confusion have a diameter equal to or smaller than an allowable circle of confusion is a focus area in the segment frame, laying out the segment frames so that the focus areas in respective segment frames overlap, and storing information on at least a layout of the segment frames and the corresponding resolution as a segmented image taking plan in the storage unit.

4. An imaging method performed by a computer communicatively coupled to a digital camera and a motor-driven pan head therefor and configured to control image taking by the digital camera, the method comprising:

calculating a distance from an imaging object to a fixed position of the digital camera by using a predetermined formula in accordance with a target resolution to be obtained for an image of the imaging object, an image pickup device resolution of the digital camera, and a focal length of a lens, and storing the calculated distance in a storage unit;
setting hierarchal resolutions ranging from a resolution of a captured image of the whole imaging object to the target resolution, and storing the set resolutions in the storage unit;
executing a process for each of the resolutions stored in the storage unit, the process including forming segment frames into which an image taking area is segmented by dividing an angle of view of the image taking area by a predetermined angle, laying out the segment frames so that focus areas in respective segment frames overlap, and storing information on at least a layout of the segment frames and the corresponding resolution as a segmented image taking plan in the storage unit;
transmitting an instruction to take an image from a single viewpoint for the positions of the respective segment frames for each of the resolutions, based on the segmented image taking plan containing the layout information and the resolution information stored in the storage unit, to the digital camera and the motor-driven pan head fixed at the distance from the imaging object, acquiring segmented images taken for the respective segment frames for each of the resolutions from the digital camera, and storing the acquired segmented image in the storage unit; and
executing a process for each of the segmented image taking plans stored in the storage unit, the process including reading each of captured images of a predetermined segmented image taking plan from the storage unit, forming a base image by enlarging the captured image to the same resolution as that of a segmented image taking plan having a one-step-higher resolution among the hierarchal resolutions, determining a corresponding area on the base image for each of segmented images of the segmented image taking plan having the one-step-higher resolution, based on the position of the segmented images, merging the segmented images together by aligning each of the segmented images through pattern matching between the segmented image and the base image, and storing a merged image in the storage unit.

5. A computer-readable recording medium storing an imaging program, for use in a computer communicatively coupled to a digital camera and a motor-driven pan head therefor and configured to control image taking by the digital camera, the imaging program causing the computer to execute:

a process of calculating a distance from an imaging object to a fixed position of the digital camera by using a predetermined formula in accordance with a target resolution to be obtained for an image of the imaging object, an image pickup device resolution of the digital camera, and a focal length of a lens, and storing the calculated distance in a storage unit;
a process of setting hierarchal resolutions ranging from a resolution of a captured image of the whole imaging object to the target resolution, and storing the set resolutions in the storage unit;
a process of executing a process for each of the resolutions stored in the storage unit, the process including forming segment frames into which an image taking area is segmented by dividing an angle of view of the image taking area by a predetermined angle, laying out the segment frames so that focus areas in respective segment frames overlap, and storing information on at least a layout of the segment frames and the corresponding resolution as a segmented image taking plan in the storage unit;
a process of transmitting an instruction to take an image from a single viewpoint for the positions of the respective segment frames for each of the resolutions, based on the segmented image taking plan containing the layout information and the resolution information stored in the storage unit, to the digital camera and the motor-driven pan head fixed at the distance from the imaging object, acquiring segmented images taken for the respective segment frames for each of the resolutions from the digital camera, and storing the acquired segmented image in the storage unit; and

a process of executing a process for each of the segmented image taking plans stored in the storage unit, the process including reading each of captured images of a predetermined segmented image taking plan from the storage unit, forming a base image by enlarging the captured image to the same resolution as that of a segmented image taking plan having a one-step-higher resolution among the hierarchal resolutions, determining a corresponding area on the base image for each of segmented images of the segmented image taking plan having the one-step-higher resolution, based on the position of the segmented images, merging the segmented images together by aligning each of the segmented images through pattern matching between the segmented image and the base image, and storing a merged image in the storage unit.

FIG. 1

IMAGE TAKING AREA (HEIGHT)

IMAGE TAKING AREA (WIDTH)

x AXIS

z AXIS

y AXIS

CENTER OF IMAGE
TAKING RANGE
$(x, y) = (0, 0)$

ORIENTATION
OF CAMERA
CENTER$(X\theta, Y\theta) = (0, 0)$

$Y\theta$ ANGLE
(VERTICAL)

$X\theta$ ANGLE
(HORIZONTAL)

NODAL POINT

CENTER OF ROTATION
OF VERTICAL AXIS

CENTER OF ROTATION
OF HORIZONTAL AXIS

IMAGE PICKUP
DEVICE (CCD)

CAMERA DISTANCE (z AXIS)

90°

SINGLE-VIEWPOINT IMAGE TAKING

FIG. 2

```
┌─────────────────────────────────┐
│      CREATE SEGMENTED           │
│      IMAGE TAKING PLAN          │
└─────────────────────────────────┘
                │
                ▼
┌─────────────────────────────────┐
│   TAKE IMAGE BASED ON           │
│   SEGMENTED IMAGE TAKING PLAN   │
└─────────────────────────────────┘
                │
                ▼
┌─────────────────────────────────┐
│     MERGING CAPTURED IMAGES     │
└─────────────────────────────────┘
```

FIG. 3

START

s100 — STORE SIZE INFORMATION ON IMAGING OBJECT

s101 — STORE TARGET RESOLUTION INFORMATION

s102 — STORE INFORMATION ON SIZE AND NUMBER OF PIXELS OF IMAGE PICKUP DEVICE AS CAMERA CONDITIONS

s103 — STORE FOCAL LENGTH AND MINIMUM IMAGE-TAKING DISTANCE OF LENS FOR USE IN IMAGE TAKING WITH TARGET RESOLUTION AS LENS CONDITIONS

s104 — CALCULATE AND STORE CAMERA DISTANCE ACCORDING TO TARGET RESOLUTION, AND CCD RESOLUTION AND FOCAL LENGTH OF LENS

s105 — SET AND STORE HIERARCHICAL RESOLUTIONS

s106 — SET RESOLUTION OF SEGMENTED IMAGE TAKING PLAN UNDER CREATION AS TARGET RESOLUTION

s107 — CALCULATE LAYOUT OF SEGMENT FRAMES

s108 — CALCULATE IN-FOCUS AREA

s109 — ARRANGE SEGMENT FRAME IN CENTER OF IMAGE TAKING AREA, AND CALCULATE AND ARRANGE FOCUS AREAS OF NEIGHBORING SEGMENT FRAMES SO THAT FOCUS AREAS OF NEIGHBORING SEGMENT FRAMES OVERLAP WITH FOCUS AREA OF CENTER SEGMENT FRAME

s110 — SYNTHESIZE FOCUS AREAS OF GROUP OF CENTER SEGMENT FRAME AND SEGMENT FRAMES THEREAROUND, AND DETERMINE SYNTHESIZED FOCUS AREA AS CENTER FOCUS AREA

s111 — CENTER FOCUS AREA ≥ IMAGE TAKING AREA ?  — NO / YES

s114 — SET ONE-STEP-LOWER RESOLUTION

s112 — RETAIN INFORMATION ON SEGMENTED IMAGE TAKING PLAN

s113 — ARE STEPS COMPLETED FOR ALL RESOLUTIONS? — NO / YES

END

FIG. 4

NODAL POINT

LENS f

CCD

p

w

z

b

Cw
Cd

(1) IMAGE TAKING FROM FRONT

p'

t

w'

z'

b'

θ

(2) IMAGE TAKING AT ANGLE θ

FIG. 5

FIG. 6

ANGLE OF VIEW IN WIDTH DIRECTION IS 10°

SEGMENT FRAME

10°

WHEN MINIMUM OVERLAP IS 0°

SEGMENT FRAMES ARE UNIFORMLY ARRANGED IN IMAGE TAKING AREA

WHEN MINIMUM OVERLAP IS 10°

NUMBER OF SEGMENT FRAMES INCREASES BY ONE, OVERLAP IS 20% (2°), AND SEGMENT FRAMES ARE ARRANGED WITH CAMERA ANGLES SHIFTED 8° FROM EACH OTHER

WHEN ANGLE OF VIEW OF IMAGE TAKING RANGE IN WIDTH DIRECTION IS 50°

IMAGE TAKING RANGE (50° IN WIDTH DIRECTION)

25°

0°

±25°

−20 −10 0 10 20

0° (0%)

IMAGE TAKING DIRECTION (WIDTH)

−20 −12 −4 4 12 20

OVERLAP 2° (20%)

IMAGE TAKING DIRECTION (WIDTH)

FIG. 7

EXAMPLE IN WHICH FRAMES ARE EQUIANGULARLY LAID OUT

TABLE 1
SEGMENT FRAME TABLE OF SEGMENTED IMAGE TAKING PLAN

| FRAME NAME | ANGLE IN x DIRECTION | ANGLE IN y DIRECTION | CAPTURED IMAGE FILE NAME |
|---|---|---|---|
| Frame0101 | 20° | 24° | file0101 |
| Frame0102 | 10° | 24° | file0102 |
| ⟂ | ⟂ | ⟂ | ⟂ |
| Frame0402 | 10° | 0° | file0402 |
| Frame0403 | 0° | 0° | file0403 |
| Frame0404 | −10° | 0° | file0404 |
| ⟂ | ⟂ | ⟂ | ⟂ |
| Frame0704 | −10° | −24° | file0704 |
| Frame0705 | −20° | −24° | file0705 |

TABLE 2
SEGMENTED IMAGE TAKING CONDITIONS OF SEGMENTED IMAGE TAKING PLAN

| IMAGE TAKING AREA | LENS CONDITIONS | CAMERA CONDITIONS | FOCUS CONDITIONS | IMAGE TAKING RESOLUTION |
|---|---|---|---|---|
|  |  |  |  |  |

FIG. 8

EP 2 475 161 A1

FIG. 9

FIG. 10

SEGMENT FRAME

IMAGING OBJECT

REGION WITHIN IMAGING OBJECT
BUT OUTSIDE FOCUS AREA

FOCUS AREA

FIG. 11

SEGMENT FRAME

FOCUS
AREA

FIG. 12

START

s200 — READ SEGMENTED IMAGE TAKING PLAN FOR IMAGE TAKING OF WHOLE IMAGING OBJECT FROM STORAGE UNIT

READ POSITION INFORMATION ON SEGMENT FRAMES, AND INFORMATION ON RESOLUTION OR THE LIKE INDICATED BY SEGMENTED IMAGE TAKING PLAN — s201

GIVE ANGLE ROTATION INSTRUCTION TO MOTOR-DRIVEN PAN HEAD, AND PRESS SHUTTER INSTRUCTION TO DIGITAL CAMERA, IN RESPONSE TO IMAGE-TAKING START TRIGGER — s202

s203 — START TAKING WHOLE-OBJECT IMAGE

s204 — SEGMENT FRAME IS LAST ONE IN SEGMENTED IMAGE TAKING PLAN? — YES

NO

READ SUBSEQUENT SEGMENT FRAME — s204a

s205 — SEGMENT FRAME IS LAST ONE IN SEGMENTED IMAGE TAKING PLAN? — YES

NO

SELECT SEGMENTED IMAGE TAKING PLAN HAVING ONE-STEP-HIGHER RESOLUTION — s206

END

FIG. 13

START

s300 — READ SEGMENTED IMAGE TAKING PLANS

s301 — DETERMINE PLAN FOR TAKING OF WHOLE-OBJECT IMAGE

s302 — READ CAPTURED IMAGE DATA

s303 — ELIMINATE CONTAMINANTS OR DISTORTIONS PRODUCED IN OPTICAL SYSTEM

s304 — CORRECT CAPTURED IMAGE FOR DISTORTIONS OR MISALIGNMENTS PRODUCED IN IMAGE TAKING, AND FORM WHOLE-OBJECT IMAGE HAVING SIMILAR SHAPE TO ACTUAL SHAPE OF IMAGING OBJECT

s305 — ENLARGE CORRECTED WHOLE-OBJECT IMAGE TO ONE-STEP-HIGHER RESOLUTION, AND STORE ENLARGED IMAGE AS BASE IMAGE

s306 — READ SEGMENTED IMAGE TAKING PLAN HAVING ONE-STEP-HIGHER RESOLUTION

s307 — READ PIECE OF SEGMENTED IMAGE DATA

s308 — ELIMINATE CONTAMINANTS OR DISTORTIONS PRODUCED IN OPTICAL SYSTEM FROM READ SEGMENTED IMAGE DATA

s309 — CUT OUT IN-FOCUS AREA FROM SEGMENTED IMAGE, AND ARRANGE IN-FOCUS AREA IN CORRESPONDING POSITION ON BASE IMAGE

s310 — SET CENTRAL AREA OF SEGMENTED IMAGE AS PATTERN MATCHING POINT

s311 — PERFORM PATTERN MATCHING BETWEEN PATTERN MATCHING POINT AND BASE IMAGE, AND CHANGE SHAPE OF SEGMENTED IMAGE AND ARRANGE SEGMENTED IMAGE, BASED ON AMOUNT OF DISPLACEMENT

s312 — AMOUNT OF DISPLACEMENT IS ZERO OR PREDETERMINED VALUE OR BELOW?, AND NUMBER OF PATTERN MATCHING POINTS IS PREDETERMINED VALUE OR MORE? — YES

NO

s313 — ADD PATTERN MATCHING POINT

IS PROCESSING COMPLETED FOR ALL SEGMENTED IMAGES? — NO

YES

s315 — MERGE ALL SEGMENTED IMAGE DATA AFTER CHANGE IN SHAPE AND ALIGNMENT

s316 — SEGMENTED IMAGE TAKING PLAN HAS TARGET RESOLUTION? — YES

NO

s317 — FORM BASE IMAGE BY ENLARGING MERGED IMAGE TO RESOLUTION OF SEGMENTED IMAGE TAKING PLAN HAVING ONE-STEP-HIGHER RESOLUTION

END

FIG. 14

<table>
<tr><td colspan="2" align="center">**INTERNATIONAL SEARCH REPORT**</td><td>International application No.<br><br>PCT/JP2010/068923</td></tr>
</table>

| A. CLASSIFICATION OF SUBJECT MATTER |
|---|
| *H04N5/225*(2006.01)i, *G06T3/00*(2006.01)i, *H04N5/232*(2006.01)i |

According to International Patent Classification (IPC) or to both national classification and IPC

| B. FIELDS SEARCHED |
|---|

Minimum documentation searched (classification system followed by classification symbols)
H04N5/225, G06T3/00, H04N5/232

Documentation searched other than minimum documentation to the extent that such documents are included in the fields searched
Jitsuyo Shinan Koho          1922-1996     Jitsuyo Shinan Toroku Koho     1996-2010
Kokai Jitsuyo Shinan Koho     1971-2010     Toroku Jitsuyo Shinan Koho      1994-2010

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | Shun'ichi TAKEUCHI, "High Resolution Image Digitization by Layered Image Mosaicing Using Projected Mask", The Transactions of the Institute of Electronics, Information and Communication Engineers, (J83-D-II), no.4, THE TRANSACTIONS OF THE INSTITUTE OF ELECTRONICS, INFORMATION AND COMMUNICATION ENGINEERS D-II, 25 April 2000 (25.04.2000), vol.J83-D-II, 1090-1099 | 1-5 |
| A | JP 2001-128051 A (Ricoh Co., Ltd.), 11 May 2001 (11.05.2001), entire text; all drawings & US 2005/0243197 A1 | 1-5 |

[X] Further documents are listed in the continuation of Box C.          [ ] See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>12 November, 2010 (12.11.10) | Date of mailing of the international search report<br>22 November, 2010 (22.11.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/068923 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-077707 A  (Minolta Co., Ltd.),<br>15 March 2002 (15.03.2002),<br>entire text; all drawings<br>(Family: none) | 1-5 |
| A | JP 09-018750 A  (Canon Inc.),<br>17 January 1997 (17.01.1997),<br>entire text; all drawings<br>(Family: none) | 1-5 |
| A | JP 11-196317 A  (Minolta Co., Ltd.),<br>21 July 1999 (21.07.1999),<br>entire text; all drawings<br>& US 6720997 B1 | 1-5 |
| A | JP 11-295783 A  (Canon Inc.),<br>29 October 1999 (29.10.1999),<br>entire text; all drawings<br>(Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009269035 A

- JP 2006338284 A

**Non-patent literature cited in the description**

- **Shunichi TAKEUCHI et al.** High Resolution Image Digitization by Layered Image Mosaicing Using Projected Mask. *IEICE Transactions, D-II,* April 2000, vol. J83-D-II (4), 1090-1099